# EUROPÄISCHE PATENTSCHRIFT

(11) **EP 1 831 718 B1**
(45) Veröffentlichungstag und Bekanntmachung des Hinweises auf die Patenterteilung: **25.05.2011**
(21) Anmeldenummer: 05817325.3
(22) Anmeldetag: 21.11.2005
(51) Int. Cl.: G01S 11/12

(54) **STEREOKAMERA F]R EIN KRAFTFAHRZEUG**
STEREO CAMERA FOR A MOTOR VEHICLE
CAMERA STEREO POUR UN VEHICULE A MOTEUR

(30) Priorität: 23.12.2004 DE 102004061998
(43) Veröffentlichungstag der Anmeldung: 12.09.2007
(73) Patentinhaber: ROBERT BOSCH GMBH, 70442 Stuttgart (DE)
(72) Erfinder: SCHICK, Jens, 71083 Herrenberg (DE); SCHMACK, Andreas, 71229 Leonberg (DE); FRITZ, Steffen, 75449 Wurmberg (DE)
(86) Internationale Anmeldenummer: PCT/EP2005/056100
(87) Internationale Veröffentlichungsnummer: WO 2006/069854

(56) Entgegenhaltungen:
- EP-A- 0 454 516
- EP-A- 0 896 267
- EP-A- 1 028 387
- DE-A1- 4 325 542
- US-A- 5 650 944
- US-A1- 2003 076 688

## Beschreibung

### Stand der Technik

Die vorliegende Erfindung betrifft eine Vorrichtung für ein Kraftfahrzeug mit wenigstens einer ersten Kamera und wenigstens einer zweiten Kamera, wobei die erste Kamera und die zweite Kamera in wenigstens einer Kameraeigenschaft unterschiedlich sind und wobei die erste Kamera und die zweite Kamera als Stereokamera wirken, wie beispielsweise bekannt aus der US 2003/0076688 A1.

Die U.S. 5,650,944 offenbart ein Stereokamerasystem, wobei eine unterschiedliche Empfindlichkeit der beiden Stereokameras ausgeglichen wird.

Die EP 0 454 516 A1 offenbart ein Stereokamerasystem, dessen Kameras unterschiedliche spektrale Empfindlichkeit aufweisen.

Die EP 1 028 387 A2 offenbart eine Einrichtung zur Umfelderkennung, insbesondere zur Verkehrszeichenerkennung mit mindestens zwei Kameras mit überlappenden Gesichtsfeldern, welche eine stereoskopische Videosequenz an eine Bildverarbeitungseinheit liefern; die mittels dreidimensionaler Mustererkennung und Bildverarbeitung Verkehrszeichen detektiert und klassifiziert.

Bei Kraftfahrzeugherstellem befinden sich eine Vielzahl von vorausschauenden Videokamerafimktionen, wie die Nächtsichtunterstützung als Nachtsichtsystem, Spurerkennung, Objekterkennung oder die Verkehrszeichenerkennung in der Planung. Für einige der genannten Funktionen ist bekannt, dass Stereokameras besonders gut geeignet sind

Aus der DE 102 19 788 C1 ist ein Verfahren und eine Vorrichtung zur Sichtweitenmessung mit einem Bildsensorsystem in einem Kraftfahrzeug bekannt, wobei das Bildsensorsystem wenigstens zwei Bildsensoren aufweist, die im wesentlichen dieselbe Szene aufnehmen, allerdings unter einem etwas unterschiedlichen Sichtwinkel. Hinweise auf eine Stereokamera mit zwei vom optischen Aufbau und/oder den optischen und/oder elektrischen Eigenschaften unterschiedlichen Kameras fehlen hier.

Die DE 102 04128 A1 offenbart eine Vorrichtung zur Überrollerkennung eines Kraftfahrzeuges, die sich dadurch auszeichnet, dass sie eine Stereokamera in Fahrtrichtung aufweiset Ferner schlägt die DE 102 04 128 A1 vor, die Stereokamera für andere Zwecke, wie Nightvision (Nachtsichtunterstützung), Verkehrszeichenerkennung, Fahrspurverlassenswarner, Fahrspurverlaufserkennung und/oder Precrash-Sensierung zu nutzen. Hinweise auf eine Stereokamera mit zwei vom optischen Aufbau und/oder den optischen und/oder elektrischen Eigenschaften unterschiedlichen Kameras fehlen hier.

### Vorteile der Erfindung

Die nachfolgend beschriebene Vorrichtung für ein Kraftfahrzeug mit wenigstens einer ersten Kamera und wenigsten einer zweiten Kamera, die im wesentlichen dieselbe Szene aufnehmen und/oder als Stereokamera wirken, mit den Merkmalen des unabhängigen Patentanspruchs hat den Vorteil, dass auf der Basis der Bilder einer ersten Kamera und einer zweiten Kamera zwei oder mehr Anwendungen, insbesondere Fahrerassistenzfunktionen, mit optimaler Wirkungsweise realisierbar sind, als dies mit einer herkömmlichen symmetrischen Stereokamera der Fall ist. Dabei ist in vorteilhafter Weise nur ein geringer Aufwand zur Anpassung der Bilddaten für die Stereoauswertung notwendig. Daher wird die Funktionalität der Stereokameraanwendung in vorteilhafter Weise durch die in wenigstens einer Kameraeigenschaft unsymmetrischen Stereokamera im Wesentlichen nicht beeinflusst. Besonders vorteilhaft ist ferner, dass wenigstens eine spezielle Kameraeigenschaft einer oder beider Kameras für weitere Anwendungen, insbesondere Fahrerassistenzfunktionen, nutzbar ist Die unterschiedliche Lichtempfindlichkeit bzw Dunkelempfindlichkeit der ersten und zweiten Kamera trägt in besonders vorteilhaften Weise dazu bei, dass neben weiteren Fahrerassistenzfunktionen, wie Verkehrszeichenerkennung und/oder Objekterkennung und/oder Fahrbahnranderkennung und/oder Spurerkennuag und/oder weitere insbesondere abgeleitete Funktionen, die Fahrerassistenzfunktion Nachtsichtunterstützung kostengünstig realisierbar ist

Erfindungsgemäβ ist eine Schwarzweißkamera als erste Kamera. Für viele Fahrerassistenzfunktionen, auch bei nicht bildwiedergebenden, weisen Schwarzweißkameras durch deren geringen Preis und ihren hohen Bildqualitäten gegenüber Farbkameras Vorteile auf. Die Verwendung einer Schwarzweißkamera, beispielsweise in der Kombination einer Farbkamera mit einer Schwarzweißkamera, die als Stereokamera wirken, trägt daher zu niedrigen Kosten der Vorrichtung bei.

Erfindungsgemäß ist die zweite Kamera eine Farbkamera ist, da durch die Farbkamera dem Fahrer in vorteilhafter Weise die Fahrerassistenzfunktion Verkehrszeichenerkennung besonders zuverlässig bereitstellbar ist, da die Verkehrszeichenerkennung basierend auf Farbbildern besonders sicher durchführbar ist. Ferner trägt die Farbkamera in vorteilhafter Weise zur Erweiterung der Fahrerassistenzfunktion Nachtsichtunterstützung bei, indem beispielsweise das schwarzweiße Nachtsichtbild durch ein Farbbild ergänzt wird.

Besonders vorteilhaft ist eine Vorrichtung für ein Kraftfahrzeug mit wenigsten einer ersten Kamera und wenigstens einer zweiten Kamera, wobei die erste Kamera und die zweite Kamera als Stereokamera wirken, wenn die erste Kamera und die zweite Kamera alternativ oder zusätzlich zu der Kameraeigenschaft der Lichtempfindlichkeit in wenigstens einer weiteren Kameraeigenschaft unterschiedlich sind, da hierdurch die Vorrichtung um eine andere spezielle Eigenschaft erweitert wird, die für bestimmte zu realisierende Anwendungen besonders geeignet ist und damit in vorteilhafter Weise nutzbar sind. Beispielsweise ist es vorteilhaft die erste und die zweite Kamera bezüglich der Kameraeigenschaft der horizontalen geometrischen Auflösung unterschiedlich auszulegen, indem beispielsweise die erste Kamera eine horizontale geometrische Auflösung von 800 Pixel aufweist, während die zweite Kamera eine horizontale geometrische Auflösung von 1600 Pixel aufweist.

Erfindungsgemäß wird die Fahrerassistenzfunktion Nachtsichtunterstützung im Wesentlichen durch die erste Kamera gewährleistet während gleichzeitig im Wesentlichen durch die zweite Kamera die Fahrerassistenzfunktion Verkehrszeichenerkennung gewährleistet wird. Besonders vorteilhaft ist hierbei, dass das Zusammenwirken der ersten und der zweiten Kamera als Stereokamera erhalten bleibt und die Bilder der Kameras einer stereoskopischen Bildverarbeitung zugänglich sind. Besonders vorteilhaft ist dabei, dass die erste und die zweite Kamera als Stereokamera weitere Fahrerassistenzfunktionen, wie die Objekterkennung, gewährleisten.

Besonders vorteilhaft ist ferner, dass die Vorrichtung derart konfiguriert ist, dass ein Bild der ersten Kamera und/oder ein Bild der zweiten Kamera bezüglich wenigstens einer Bildeigenschaft derart aufbereitet wird, dass Bilder der ersten und der zweiten Kamera nach der Aufbereitung in dieser Bildeigenschaft nahezu gleich sind, da hierdurch eine einfache stereoskopische Verarbeitung, wie bei einer Stereokamera mit zwei identischen Kameras, möglich ist. Dies trägt zu einfachen und schnellen. Algorithmen und damit zu einer kostengünstigen Vorrichtung bei. Vorteilhaft ist hierbei insbesondere, dass die Bildeigenschaft eine horizontale geometrische Auflösung des Bildes und/oder eine vertikale geometrische Auflösung des Bildes und/oder eine Grauwertauflösung des Bildes und/oder eine Bildhelligkeit ist.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 eine Übersichtszeichnung,
- Figur 2 ein Blockdiagramm der Vorrichtung.

### Beschreibung von Ausführungsbeispielen

Nachfolgend wird eine Vorrichtung für ein Kraftfahrzeug mit wenigstens einer ersten Kamera und wenigstens einer zweiten Kamera vorgeschlagen, wobei die erste Kamera und die zweite Kamera als Stereokamera wirken, wobei die erste Kamera und die zweite Kamera in wenigstens einer Kameraeigenschaft unterschiedlich sind, insbesondere dass die Lichtempfindlichkeit der ersten Kamera und die Lichtempfindlichkeit der zweiten Kamera unterschiedlich sind Ferner ist die Vorrichtung derart konfiguriert, dass die Fahrerassistenzfunktionen Nachtsichtunterstützung und/oder Verkehrszeichenerkennung und/oder Objekterkennung und/oder Fahrbahnranderkennung und/oder Spurerkennung und/oder andere Funktionen gewährleistet sind.

Anstatt zwei identischen Kameras einer Stereokamera wird nachfolgend vorgeschlagen, zwei, in wenigstens einer Kameraeigenschaft oder der Kombination mehrerer Kameraeigenschaften voneinander unterschiedliche Kameras in einer Stereokamera einzusetzen.

Das Wirken als Stereokamera zeichnen sich dadurch aus, dass eine Stereokamera wenigstens zwei im festen relativen Bezug zueinander angeordnete Kameras aufweist. Dabei nehmen die zwei Kameras vorzugsweise im Wesentlichen dieselbe Szene auf, wobei sich die Sichtbereiche der zwei Kameras wenigstens teilweise überlappen. Bevorzugt, aber nicht notwendigerweise, sind die optischen Achsen der zwei Kameras der Stereokamera parallel. Vorzugsweise ist die Ausrichtung der beiden Kameras zueinander genau bekannt, wobei die Ausrichtungsdaten infolge von geringen Fertigung- und/oder Einbautoleranzen bekannt sind und/oder bei einem Kalibrierschritt, beispielsweise beim Einbau der Kameras in ein Kraftfahrzeug, gewonnen werden. Alternativ oder zusätzlich werden in einer Variante die Ausrichtungsdaten online, also im Betrieb der Stereokamera, durch Vergleich der Bilder gewonnen. Das Wirken als Stereokamera ist alternativ oder zusätzlich dadurch gekennzeichnet, dass durch Auswerten der Bildinformationen der wenigstens einen ersten Kamera und der wenigstens einen zweiten Kamera räumliche Informationen, beispielsweise durch Triangulationsverfahren, ermittelt werden. Bei Triangulationsverfahren werden mittels des unterschiedlichen Sichtwinkels der beiden Kameras räumliche Informationen gewonnen.

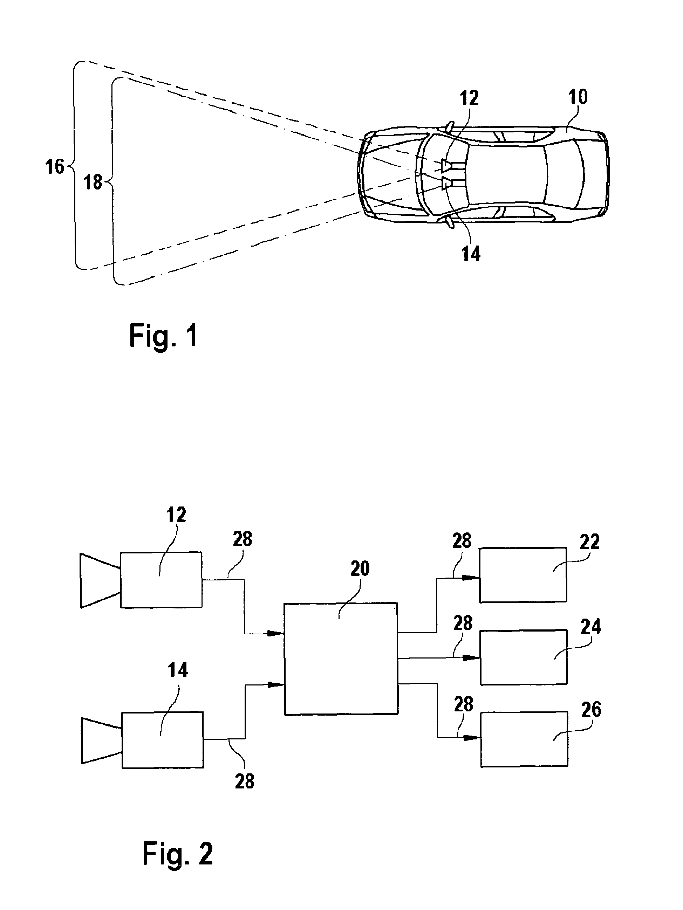

Figur 1 zeigt eine Übersichtszeichnung der Vorrichtung in einem Kraftfahrzeug 10 des bevorzugten Ausführungsbeispiels, bestehend aus einer ersten Kamera 12 und einer zweiten Kamera 14. Im bevorzugten Ausführungsbeispiel sind die erste Kamera 12 und die zweite Kamera 14 an der Windschutzscheibe im Bereich des Innenrückspiegels des Kraftfahrzeuges 10 montiert. Die beiden Kameras 12, 14 sind in Fahrtrichtung ausgerichtet, wobei die erste Kamera 12 einen horizontalen Sichtbereich 16 aufweist, der nahezu identisch mit dem horizontalen Sichtbereich 18 der zweiten Kamera 14 ist. Ferner ist die optische Achse der ersten Kamera 12 und die optische Achse der zweiten Kamera 14 im Wesentlichen parallel.

Figur 2 zeigt ein Blockdiagramm der Vorrichtung des bevorzugten Ausführungsbeispiels, bestehend aus einer ersten Kamera 12, einer zweiten Kamera 14, einer Verarbeitungseinheit 20 und optischen, akustischen und haptischen Anzeigeeinheiten 22, 24, 26. Die erste Kamera 12 ist eine Schwarzweißkamera und umfasst einen Grauwertbildsensor mit einer hohen Lichtempfindlichkeit bzw. Dunkelempfindlichkeit, einer Pixelgröße von 8 µm bei einer horizontalen geometrischen Auflösung von 800 Pixeln. Der Sichtwinkel der ersten Kamera beträgt im bevorzugten Ausführungsbeispiel ± 20°. Die zweite Kamera 14 ist eine Farbkamera und umfasst einen hochauflösenden Farbbildsensor mit einer Pixelgröße von 4 µm bei einer horizontalen geometrischen Auflösung von 1600 Pixeln. Der Sichtwinkel der zweiten Kamera beträgt im bevorzugten Ausfiihrungsbeispiel ± 35°.Die erste Kamera 12 und die zweite Kamera 14 unterscheiden sich im bevorzugten Ausführungsbeispiel insbesondere in den Kameraeigenschaften Lichtempfindlichkeit, Pixelgröße, horizontale geometrische Auflösung und Abbildungsmaßstab. Sowohl die erste Kamera 12 als auch die zweite Kamera 14 sind CMOS-Kameras. In einer Variante des bevorzugten Ausführungsbeispiels sind alternativ oder zusätzlich die erste Kamera 12 und/oder die zweite Kamera 14 als CCD-Kamera oder in einer anderen Bildsensortechnologie ausgeführt. Die Bilddaten der beiden Kameras 12, 14 werden über Signalleitungen 28 der Verarbeitungseinheit 20 zugeführt. Die Verarbeitungseinheit 20 verarbeitet die Bilddaten und stellt im bevorzugten Ausführungsbeispiel die Fahrerassistenzfunktionen Nachtsichtunterstützung, Verkehrszeichenerkennung und Objekterkennung zur Verfügung. Über weitere Signalleitungen 28 werden Signale der Verarbeitungseinheit 20 über Signalleitungen 28 an eine optische Anzeigeeinheit 22, eine akustische Anzeigeeinheit 24 und eine haptische Anzeigeeinheit 26 übertragen. Die Übertragung der Signale über die Signalleitungen 28 erfolgt elektrisch und/oder optisch und/oder per Funk. Alternativ oder zusätzlich ist die Signalleitung 28 als Bus ausgeführt. Die Verarbeitung in der Verarbeitungseinheit 20 ist durch Programme oder Programmschritte in einem Mikroprozessor und/oder mittels von programmierbarer Logik realisiert. Zur Bereitstellung der Fahrerassistenzfunktion Nachtsichtunterstützung verarbeitet die Verarbeitungseinheit 20 die Bilddaten der ersten Kamera 12, die hierfür die nachfolgend aufgeführten Eigenschaften aufweist. Die erste Kamera 12 besitzt eine gute Kontrastauflösung im Dunkeln, verbunden mit einem hohen Dynamikbereich. Aus den Bilddaten der ersten Kamera 12 kopiert die Verarbeitungseinheit 20 einen zentralen Bildausschnitt von 440 Pixel Breite heraus, bearbeitet den Bildausschnitt nach und führt den nachbearbeiteten Bildausschnitt der optischen Anzeigeeinheit 22 zu. Bei der optischen Anzeigeeinheit 22 handelt es sich im bevorzugten Ausführungsbeispiel um ein Head-up-Display, das den Bildausschnitt dem Fahrer des Kraftfahrzeuges über die Windschutzscheibe anzeigt. In einer Variante des bevorzugten Ausführungsbeispiels ist vorgesehen, den Bildausschnitt über eine Anzeige (Display), insbesondere ein LCD-Display, als optische Anzeigeeinheit 22 dem Fahrer anzuzeigen. Zur Bereitstellung der Fahrerassistenzfunktion Verkehrszeichenerkennung verarbeitet die Verarbeitungseinheit 20 die Bilddaten der zweiten Kamera 14, die hierfür die nachfolgend aufgeführten Eigenschaften aufweist. Die zweite Kamera 14 ist eine Farbkamera zur Erzeugung eines Farbbildes. Dabei besitzt die zweite Kamera 14 zusätzlich eine hohe Blendfestigkeit. In der Verarbeitungseinheit 20 sind Algorithmen zur Verkehrszeichenerkennung implementiert. Im bevorzugten Ausführungsbeispiel werden durch Farbsegmentierung eine Grobklassifikation von Verkehrszeichen und schließlich die Erkennung der Verkehrszeichen durch Mustervergleich durchgerührt. Anschließend wird die Bedeutung des Verkehrszeichens ermittelt. Beispielsweise führt die Erkennung eines Verkehrszeichens, das einer Geschwindigkeitsbegrenzung von 80 km/h symbolisiert, dazu, dass die Verarbeitungseinheit 20 die aktuelle Geschwindigkeit des Kraftfahrzeugs mit der Geschwindigkeitsbegrenzung vergleicht und bei Überschreiten der Geschwindigkeit Signale über die Signalleitungen 28 sowohl an die akustische Anzeigeeinheit 24, beispielsweise einen Lautsprecher, und die haptische Anzeigeeinheit 26 überträgt, um den Fahrer akustisch und haptisch zu warnen. Ferner wird der Fahrer über die optische Anzeigeeinheit 22 durch Anzeige eines Verkehrszeichens über die Geschwindigkeitsüberschreitung und die Geschwindigkeitsbegrenzung informiert. Zur Bereitstellung der Fahrerassistenzfunktion Objekterkennung verarbeitet die Verarbeitungseinheit 20 die Bilddaten der ersten Kamera 12 und der zweiten Kamera 14. Hierzu kopiert die Verarbeitungseinheit 20 die Bilddaten der zweiten Kamera 14, wobei die Verarbeitungseinheit gleichzeitig eine Reduzierung der horizontalen Bildauflösung vornimmt und die Farbwerte des Farbbildes in Grauwerte umrechnet. Das daraus resultierende Bild und das Bild der ersten Kamera 12 werden in der Verarbeitungseinheit 20 Stereoalgorithmen zur Objekterkennung zugeführt. Beispielsweise wird im bevorzugten Ausführungsbeispiel ein Spurverlassenswarner realisiert. Durch erkannte Objekte, wie Leitpfosten und/oder Fahrbahnmarkierungen, wird im bevorzugten Ausführungsbeispiel überwacht, ob das Kraftfahrzeug die Fahrspur verlässt. Bei einem erkannten Verlassen der Fahrspur warnt die Verarbeitungseinheit 20 den Fahrer über die akustische Anzeigeeinheit 24. Der Fahrerassistenzfunktion Objekterkennung liegt damit eine Stereokamera zugrunde, wobei diese Stereokamera einen horizontalen Öffnungswinkel von ± 20° hat.

Bei digitalen Kameras wird unter der Lichtempfindlichkeit die Lichtempfindlichkeit des Bildsensors (Bildwandler) verstanden, wobei die Lichtempfindlichkeit im Vergleich zur Empfindlichkeit eines chemischen Filmes angegeben wird. Bei chemischen Filmen wird die Empfindlichkeit mit ISO-Werten gekennzeichnet. ISO ist dabei eine Abkürzung für "International Standard Organisation". Geläufige ISO-Empfindlichkeitswerte reichen von ISO 25 bis ISO 6400. Bei niedriger ISO-Einstellung braucht ein Bildsensor vergleichsweise mehr Licht um ein Bild zu erzeugen als bei hoher ISO-Einstellung. Eine Verdoppelung bzw. Halbierung des ISO-Wertes hat eine Halbierung bzw. Verdoppelung der Belichtung zur Folge. Im Gegensatz zu Filmen haben Bildwandler im Allgemeinen eine feste Empfindlichkeit, jedoch kann eine höhere Empfindlichkeit durch Verstärkung des Bildsignals auf Kosten eines stärkeren Bildrauschen erreicht werden. Alternativ oder zusätzlich wird eine höhere Empfindlichkeit durch Erhöhung der Integrationszeit erreicht, wobei die Integrationszeit der Belichtungszeit eines chemischen Films entspricht. Die Erhöhung der Integrationszeit kann auf Kosten der maximalen Bildwiederholrate und/oder einer stärkeren Bewegungsunschärfe erfolgen. Im bevorzugten Ausführungsbeispiel wird die höhere Lichtempfindlichkeit der ersten Kamera gegenüber der zweiten Kamera durch einen anderen Bildsensortyp erreicht, der eine hohe Empfindlichkeit aufweist. In einer Variante des bevorzugten Ausführungsbeispiels wird für die erste Kamera und die zweite Kamera derselbe Bildsensortyp verwendet, wobei die Lichtempfindlichkeit der ersten Kamera durch eine Signalverstärkung, beispielsweise durch Erhöhung des Gains des Bildsensors, erreicht wird.

In einer weiteren Variante des bevorzugten Ausführungsbeispiels ist die spektrale Empfindlichkeit der wenigstens einen ersten Kamera und der wenigsten einen zweiten Kamera unterschiedlich. Vorzugsweise ist die wenigstens eine erste Kamera im nahen infraroten und/oder im sichtbaren und/oder sowohl im sichtbaren als auch im nahen infraroten empfindlich, wobei die zweite Kamera im nahen infraroten und/oder im sichtbaren und/oder sowohl im sichtbaren als auch im nahen infraroten empfindlich ist. Alternativ oder zusätzlich ist wenigstens eine der Kameras eine Farbkamera. Jede der genannten drei Grundvarianten ist bei jeweils einer Kamera ausgeführt und mit der zweiten Kamera mit ebenfalls einer der genannten Varianten kombiniert.

In einer Variante des bevorzugten Ausführungsbeispiels sind die erste Kamera und die zweite Kamera in wenigstens einer weiteren Kameraeigenschaft unterschiedlich, wobei wenigstens eine weitere Kameraeigenschaft eine Brennweite des Objektivs und/oder die Blende des Objektivs und/oder die Vergütung des Objektivs und/oder das optische Filter der Kamera, beispielsweise ein fest in die Kamera und/oder das Objektivgehäuse integriertes optisches Filter, und/oder die Bildsensortechnologie, beispielsweise CMOS oder CCD, und/oder die Pixelgröße und/oder die Pixelgeometrie und/oder die horizontale geometrische Auflösung und/oder die vertikale geometrische Auflösung und/oder die Auflösung der Kameraschnittstelle, also des digitalen Interfaces (Bittiefe) und/oder der Belichtungsparameter, wie der Gain und/oder der Offset und/oder die Integationszeit, und/oder die Bildrate und/oder die spektrale Empfindlichkeit und/oder die spektrale Empfindlichkeit einzelner Farbkanäle ist. Alternativ oder zusätzlich ist in einer Variante des bevorzugten Ausführungsbeispiels vorgesehen, dass die Ausrichtung der Kamera im Fahrzeug unterschiedlich ist, also dass die optische Achse der ersten Kamera und die optische Achse der zweiten Kamera nicht parallel sind.

## Patentansprüche

1. Vorrichtung für ein Kraftfahrzeug mit wenigstens einer ersten Kamera (12) und wenigstens einer zweiten Kamera (14), wobei die erste Kamera (12) und die zweite Kamera (14) in wenigstens einer Kameraeigenschaft unterschiedlich sind,
und wobei die erste Kamera (12) und die zweite Kamera (14) als Stereokamera wirken,
**dadurch gekennzeichnet, dass**
die erste Kamera (12) eine Schwarzweißkamera ist,
die zweite Kamera (14) eine Farbkamera ist,
die Vorrichtung derart konfiguriert ist, dass eine Fahrerassistenzfunktion Nachtsichtunterstützung im Wesentlichen durch die erste Kamera (12) gewährleistet wird,
die Vorrichtung derart konfiguriert ist, dass eine Fahrerassistenzfunktion Verkehrszeichenerkennung im Wesentlichen durch die zweite Kamera (14) gewährleistet wird,
die Vorrichtung derart konfiguriert ist, dass die erste und die zweite Kamera (12, 14) als Stereokamera die Fahrerassistenzfunktion Objekterkennung und/oder Fahrbahnranderkennung und/oder Spurenerkennung gewährleisten,
und
wobei eine Verarbeitungseinheit (20) zum Verarbeiten der Bilddaten der ersten und zweiten Kamera (12, 14) vorgesehen ist, welche derart gestaltet ist, dass sie zur Bereitstellung der Fahrerassistenzfunktion Objekterkennung und/oder Fahrbahnranderkennung und/oder Spurerkennung die Bilddaten der ersten und zweiten Kamera (12, 14) verarbeitet und hierzu die Bilddaten der zweiten Kamera (14) kopiert und gleichzeitig Farbwerte des Farbbildes der zweiten Kamera (14) in Grauwerte umrechnet und ein daraus resultierendes Bild der zweiten Kamera (14) und das Bild der ersten Kamera (12) Stereoalgorithmen zur Objekterkennung zuführt.

2. Vorrichtung nach Anspruch 1,
**dadurch gekennzeichnet, dass**
die Lichtempfindlichkeit der ersten Kamera (12) und die Lichtempfindlichkeit der zweiten Kamera (14) unterschiedlich ist.

3. Vorrichtung nach Anspruch 2,
**dadurch gekennzeichnet, dass**
die Lichtempfindlichkeit der ersten Kamera (12) höher ist als die Lichtempfindlichkeit der zweiten Kamera (14).

4. Vorrichtung nach einem der vorhergehenden Ansprüche,
**dadurch gekennzeichnet, dass**
die wenigstens eine Kameraeigenschaft eine Brennweite eines Objektivs und/oder eine Blende eines Objektivs und/oder eine Vergütung eines Objektivs und/oder ein optischer Filter der Kamera (12, 14) ist.

5. Vorrichtung nach einem der vorhergehenden Ansprüche,
**dadurch gekennzeichnet, dass**
die wenigstens eine Kameraeigenschaft eine Bildsensortechnologie und/oder eine Pixelgröße und/oder eine Pixelgeometrie und/oder eine horizontale geometrische Auflösung und/oder eine vertikale geometrische Auflösung und/oder eine spektrale Empfindlichkeit und/oder eine spektrale Empfindlichkeit wenigstens eines Farbkanals umfasst.

6. Vorrichtung nach einem der vorhergehenden Ansprüche,
**dadurch gekennzeichnet, dass**
die wenigstens eine Kameraeigenschaft eine Auflösung der Kameraschnittstelle und/oder wenigstens ein Belichtungsparameter und/oder eine Bildrate umfasst.

7. Vorrichtung nach einem der vorhergehenden Ansprüche,
**dadurch gekennzeichnet, dass**
die Vorrichtung derart konfiguriert ist, dass ein Bild der ersten Kamera (12) und/oder ein Bild der zweiten Kamera (14) bezüglich wenigstens einer Bildeigenschaft derart aufbereitet wird, dass Bilder der ersten und der zweiten Kamera nach der Aufbereitung bezüglich dieser Bildeigenschaft nahezu gleich sind.

8. Vorrichtung nach Anspruch 7,
**dadurch gekennzeichnet, dass**
die Bildeigenschaft eine horizontale geometrische Auflösung des Bildes und/oder eine vertikale geometrische Auflösung des Bildes und/oder eine Grauwertauflösung des Bildes und/oder eine Bildhelligkeit umfasst.

## Claims

1. Device for a motor vehicle having at least one first camera (12) and at least one second camera (14), the first camera (12) and the second camera (14) differing in at least one camera property, and the first camera (12) and the second camera (14) acting as a stereo camera, **characterized in that** the first camera (12) is a black-and-white camera, the second camera (14) is a colour camera, the device is configured in such a way that a driver assistance function of night vision support is ensured substantially by the first camera (12), the device is configured in such a way that a driver assistance function of traffic sign recognition is substantially ensured by the second camera (14), and the device is configured in such a way that, as stereo camera, the first and the second cameras (12, 14) ensure the driver assistance function of object recognition and/or carriageway edge recognition and/or lane recognition, and there being provided for the purpose of processing the image data of the first and second cameras (12, 14) a processing unit (20) which is configured in such a way that it processes the image data of the first and second cameras (12, 14) in order to provide the driver assistance function of object recognition and/or carriageway edge recognition and/or lane recognition, and to this end copies the image data of the second camera (14) and at the same time converts colour values of the colour image of the second camera (14) into greyscale values, and feeds an image, resulting therefrom, of the second camera (14) and the image of the first camera (12) to stereoalgorithms for object recognition.

2. Device according to Claim 1, **characterized in that** the photosensitivity of the first camera (12) and the photosensitivity of the second camera (14) differ.

3. Device according to Claim 2, **characterized in that** the photosensitivity of the first camera (12) is higher than the photosensitivity of the second camera (14).

4. Device according to one of the preceding claims, **characterized in that** the at least one camera property is a focal length of a lens and/or an aperture of a lens and/or a coating of a lens and/or an optical filter of the camera (12, 14).

5. Device according to one of the preceding claims, **characterized in that** the at least one camera property comprises an image sensor technology and/or a pixel size and/or a pixel geometry and/or a horizontal geometrical resolution and/or a vertical geometrical resolution and/or a spectral sensitivity and/or a spectral sensitivity of at least one colour channel.

6. Device according to one of the preceding claims, **characterized in that** the at least one camera property comprises a resolution of the camera interface and/or at least one exposure parameter and/or an image rate.

7. Device according to one of the preceding claims, **characterized in that** the device is configured in such a way that an image of the first camera (12) and/or an image of the second camera (14) are/is conditioned with reference to at least one image property in such a way that images of the first and of the second camera are virtually the same with reference to this image property after being conditioned.

8. Device according to Claim 7, **characterized in that** the image property comprises a horizontal geometrical resolution of the image and/or a vertical geometrical resolution of the image and/or a greyscale resolution of the image and/or an image brightness.

## Revendications

1. Dispositif pour véhicule automobile, présentant au moins une première caméra (12) et au moins une deuxième caméra (14), la première caméra (12) et la deuxième caméra (14) différant par au moins une propriété,
la première caméra (12) et la deuxième caméra (14) fonctionnant comme caméra stéréo,
**caractérisé en ce que**
la première caméra (12) est une caméra en noir et blanc,
**en ce que** la deuxième caméra (14) est une caméra couleurs,
**en ce que** le dispositif est configuré de telle sorte qu'une fonction d'assistance au conducteur, à savoir une assistance à la vision nocturne, est assurée essentiellement par la première caméra (12),
**en ce que** le dispositif est configuré de telle sorte qu'une fonction d'assistance au conducteur, à savoir une détection des signaux routiers, est assurée essentiellement par la deuxième caméra (14),
**en ce que** le dispositif est configuré de telle sorte que la première et la deuxième caméra (12, 14) assurent comme caméra stéréo les fonctions d'assistance au conducteur que sont la détection d'objets, la détection de la chaussée et/ou la détection de la bande de circulation et
**en ce qu'**une unité de traitement (20) qui traite les données d'image de la première et de la deuxième caméra (12, 14) est prévue et est configurée de manière à traiter les données d'image de la première et de la deuxième caméra (12, 14) pour assurer les fonctions d'assistance au conducteur que sont la détection d'objets, la détection de la chaussée et/ou la détection de la bande de circulation et copie dans ce but les données d'image de la deuxième caméra (14) en même temps qu'elle convertit en valeurs de gris les valeurs de couleur de l'image en couleurs de la deuxième caméra (14) pour amener l'image de la deuxième caméra (14) et l'image de la première caméra (12) à des algorithmes stéréo de détection d'objets.

2. Dispositif selon la revendication 1, **caractérisé en ce que** la sensibilité à la lumière de la première caméra (12) et la sensibilité à la lumière de la deuxième caméra (14) sont différentes.

3. Dispositif selon la revendication 2, **caractérisé en ce que** la sensibilité à la lumière de la première caméra (12) est supérieure à la sensibilité à la lumière de la deuxième caméra (14).

4. Dispositif selon l'une des revendications précédentes, **caractérisé en ce que** la ou les propriétés de caméra sont la distance focale d'un objectif, l'obturateur d'un objectif, la finesse d'un objectif et/ou un filtre optique des caméras (12, 14).

5. Dispositif selon l'une des revendications précédentes, **caractérisé en ce qu'**au moins une propriété de caméra comprend une technologie de capteur d'image, une taille de pixel, une géométrie de pixel, une résolution géométrique horizontale, une résolution géométrique verticale, une sensibilité spectrale et/ou une sensibilité spectrale d'au moins un canal de couleur.

6. Dispositif selon l'une des revendications précédentes, **caractérisé en ce qu'**au moins une propriété de caméra comprend une résolution de l'interface de caméra, au moins un paramètre d'éclairage et/ou un débit d'image.

7. Dispositif selon l'une des revendications précédentes, **caractérisé en ce que** le dispositif est configuré de telle sorte qu'au moins une propriété d'image de la première caméra (12) et/ou d'une image de la deuxième caméra (14) est traitée de telle sorte qu'après le traitement, cette propriété soit presque identique pour les images de la première et de la deuxième caméra.

8. Dispositif selon la revendication 7, **caractérisé en ce que** la propriété d'image comprend une résolution géométrique horizontale de l'image, une résolution géométrique verticale de l'image, une résolution des valeurs de gris de l'image et/ou une luminosité de l'image.
